# EUROPEAN PATENT APPLICATION

(11) **EP 4 835 135 A1**
(43) Date of publication of application: **04.11.2026**
(21) Application number: 25172992.7
(22) Date of filing: 28.04.2025
(51) Int. Cl.: C25B 1/01, C01D 7/18, C25B 1/04, C25B 9/21, C25B 9/23, C25B 15/08

(54) **ELECTROCHEMICAL PROCESS FOR PRODUCING CARBONATE SALTS**

(71) Applicant: Solvay SA, 1120 Brussels (BE)
(72) Inventor: ASENSIO, Salvatore, 39300 Torrelavega (ES); HORBEZ, Dominique, 93308 Aubervilliers (FR); SAONER, Luca, 57013 Livourne (IT)
(74) Representative: Kraus & Lederer PartGmbB

(57) **Abstract**

Process for producing ammonium carbonate ((NH₄)₂CO₃) and sodium carbonate (Na₂CO₃) in an electrolyzer comprising an hydrogen depolarized anode, by feeding a base chamber of the electrolyzer with an aqueous solution comprising ammonium chloride (NH₄Cl), sodium chloride (NaCl), dissolved carbon dioxide (CO₂) and obtaining an outlet solution from the base chamber comprising ammonium carbonate ((NH₄)₂CO₃) and sodium carbonate (Na₂CO₃).

## Description

The present invention relates to a process for producing ammonium carbonate ( (NH₄)₂CO₃ ) and sodium carbonate ( Na₂CO₃ ) using an electrolyzer comprising an hydrogen depolarized anode, and a base chamber, and feeding the base chamber of the electrolyzer with an aqueous solution comprising ammonium chloride (NH₄Cl), sodium chloride (NaCl), dissolved carbon dioxide (CO₂), and obtaining an outlet solution from the base chamber comprising ammonium carbonate ((NH₄)₂CO₃) and sodium carbonate (Na₂CO₃).

### Technical field

The major industrial process for the production of synthetic sodium carbonate is the soda ash process, also known as SOLVAY process (ammonia-soda process) or, in a modified embodiment as HOU process. This process consists in treating an ammoniacal brine with gas containing carbon dioxide. From the solution sodium bicarbonate precipitates, is recovered and calcined to obtain sodium carbonate. The mother liquid obtained from the sodium bicarbonate separation contains ammonium chloride and sodium chloride. The mother liquid is then reacted either with calcium oxide or with calcium hydroxide to obtain gaseous ammonia, which is recycled back to the initial brine solution in the ammonia-soda process or treated to precipitate solid NH₄Cl in the HOU process. More details of the process for producing sodium carbonate according to the ammonia-soda ash process, and of the production of refined bicarbonate, is described in Ullmann's Encyclopedia of Industrial Chemistry ("Sodium carbonate" chapter, Vol. 33, pages 299-317, 2012 edition, Wiley-VCH Verlag GmbH & Co, in particular at paragraphs 1.4.1 and 1.4.2.

The known soda ash process has proved to consume large amounts of energy among others for the recycling of the ammonia. Furthermore, there is still a need for improvement of the recycling of ammonia and the reduction of undesired byproducts of the process.

WO2016/055367 in the name of SOLVAY describes a process for producing ammonia from a solution comprising ammonium chloride (NH₄Cl) fed in at least one base chamber of an electrodialyzer cellstack, said base chamber being maintained at a pH of at least 10, preferably maintained in the range between 10.3 to 12.0. Example in this disclosure shows the possibility to convert at least 98.5% of ammonium chloride (NH₄Cl) into ammonia (NH₄OH); as in the same conditions maintaining the base chamber at pH 9.8 the conversion of ammonium chloride to ammonia decreases to 86.5%.

Ammonium chloride in aqueous solution can be easily decomposed by electrolysis into chlorine (Cl₂) and ammonia (NH₃). Though even if such electrical chemical reaction is easy, this process is not commonly employed on account of the great danger from the tendency of ammonia and chlorine to react and form the highly explosive compound nitrogen trichloride. For instance an improved electrolysis of ammonium chloride process for the recovery or production of chlorine and/or ammonia is disclosed in US 2,209,681. In this method an electrolyzing current is passed through an electrolytic cell having an aqueous electrolyte containing ammonium and sodium chloride, the concentration of the sodium chloride being at least equal to that of the ammonium chloride. Though this process still presents the disadvantage of generating chlorine (Cl₂) and ammonia (NH₃). And therefore, it still presents the risk of explosive nitrogen trichloride generation.

WO9300460 describes an electrolyzer comprising at least one elementary cell divided into electrolyte compartments by cation-exchange membranes, said compartments are provided with a circuit for feeding electrolytic solutions and a circuit for withdrawing electrolysis products, said cell is equipped with a cathode and a hydrogen-depolarized anode assembly forming a hydrogen gas chamber fed with a hydrogen-containing gaseous stream.

### Brief description of the invention

The present invention relates to a process for producing ammonium carbonate ((NH₄)₂CO₃) and sodium carbonate (Na₂CO₃) using an electrolyzer comprising an hydrogen depolarized anode, and feeding a base chamber of the electrolyzer with an aqueous solution comprising ammonium chloride (NH₄Cl), sodium chloride (NaCl), dissolved carbon dioxide (CO₂) and obtaining an outlet solution from the base chamber comprising ammonium carbonate ((NH₄)₂CO₃) and Na₂CO₃.

The present invention relates also to a process for separating ammonium carbonate ((NH₄)₂CO₃) and/or ammonium bicarbonate (NH₄HCO₃,) from a solution comprising salts selected among: ammonium bicarbonate, ammonium carbonate, ammonium chloride (NH₄Cl), sodium chloride (NaCl) and mixtures thereof.

The invention relates also to a process for producing sodium carbonate or sodium bicarbonate in an ammonia soda ash process using the ammonium carbonate (NH₄)₂CO₃ and sodium carbonate (Na₂CO₃) produced in the above cited processes.

In the present invention the dissolved CO₂ in the solution comprising NH₄Cl and NaCl fed in the base chamber, preferably at pH of at most 9.5 are generally present as bicarbonate ions (HCO₃⁻) and carbonate ions (CO₃²⁻). Counter ions of the bicarbonate ions being the cation present in the aqueous solution such as ammonium (NH₄⁺), sodium (Na⁺), and in less extent hydronium ions (H₃O⁺).

A first advantage of the present invention is to minimize the risk of explosion when electrolyzing ammonium chloride into ammonium carbonate. Indeed, while ammonium chloride in aqueous solution is easily decomposed by electrolytic action, into chlorine (Cl₂) and ammonia, the process is not commonly employed on account of the great danger from the tendency of ammonia and chlorine to react and form the highly explosive compound nitrogen trichloride. In the present invention, the presence of an hydrogen depolarized anode avoids the formation of chlorine (Cl₂) and produces globally in each chambers a dissociation of water, in the base chamber OH- reacting with bicarbonate ions by forming carbonate ions, and in the acid chamber oxidizing the dihydrogen (H2) into acidic hydronium ion H⁺.

A second advantage of the present invention is to reduce the potential difference between electrodes, therefore reducing energy consumption, compared to a classical electrolysis of NH₄Cl into ammonia and chlorine.

A third advantage of the present invention is to increase the sustainability of processes for producing sodium carbonate according to the ammonia-soda ash process, by reducing the CO₂ emissions from fossil fuels. Indeed, the present invention enables to replace, partly or totally, the use of lime (CaO) to regenerate the ammonium chloride (NH₄Cl) into alkaline ammonia (in present invention as (NH₄)₂CO₃, or as NH₄HCO₃ when further carbonated), by an electrolysis process that can use 'green electricity' (ie. produced from: solar, wind, geothermal, biogas, and low CO₂ footprint hydroelectric sources).
Note: lime (CaO) in conventional soda ash process is manufactured mainly in limekilns wherein calcium carbonate (limestone) is calcined by using fossil carbon sources such as coke or anthracite.

A fourth advantage of the present invention, which is an advantageous embodiment, no limekiln is used for the production of the ammonium carbonate or the sodium carbonate in the present process. This enables to avoid the use of such equipment operating at high temperature (above 850°C) which is costly to build and has high maintenance costs.

A fifth advantage of the present invention is to decrease solid effluents from the ammonia distillation, as when using lime, or milk of lime, in distillation sectors, part of unreacted lime (CaO) or limestone (CaCO₃) remains in the solid effluents. In comparison, when replacing a thermal calcination of limestone with an electrical generation of alkaline and acid solutions, a limestone attack with an acid solution enables to generate the needed carbon dioxide, with minimal unreacted limestone in the final solid effluent. Also, in the case the calcium chloride (CaCl₂) is recovered, this increases the yield of calcium carbonate or of calcium oxide transformation into calcium chloride.

A sixth advantage of the present invention is also to increase the yield in the ammonia-soda process of the sodium use of sodium chloride (NaCl) used as raw material from common figures of 60-70% to figures of more than 90-95%. Indeed, the use of anionic membranes in the present process enables to migrate chlorides from NH₄Cl and NaCl into acidic solution (ie solutions comprising HCl) while keeping the sodium ions in the base chamber and to recycle part of the outlet solution of the base chamber into a soda ash process. Therefore, the process of present invention enables to improve the circularity of the use of raw material such as sodium chloride or limestone to produce sodium carbonate.

A seventh advantage of the present invention is to enable a recovery of ammonia in a soda-ammonia process close to 100%.

A eighth advantage of the present invention using electrolysis is that it enables to operate at a higher current density compared to electrodialysis processes. For instance, in chlorine - caustic soda electrolyzers, current densities (expressed in amperes per square meter of ions-permselective membranes) is higher of factor of 1.5 to 12 compared to electrodialyzers current densities operating NaCl splitting, where hydrochloric acid and caustic soda are obtained. This reduces the overall investment in needed membrane surfaces for such installation and its maintenance. It also enables to reduce the number of electrical equipment and needed pumps for a same production capacity.

A ninth advantage of the present invention using electrolysis is that it enables to operate at temperatures sensitively higher than the temperatures used in electrodialysis processes, fitting well with temperatures used in ammonia-soda process.

A tenth advantage of the present invention is an important flexibility of the production operation as: controlling or modulating the current intensity of the electrolyzer, enables to adapt the ammonium carbonate and sodium carbonate production, this in a short modulation time, in less than 10 minutes for instance when doubling or decreasing of a factor 2 the production output. When operating an electrodialyzer, this modulation is generally performed by stopping or starting part of the stacks of the overall equipment.

An eleventh advantage of the present invention using electrolysis cells is the convenient way to open one cell component when a membrane control or a membrane replacement is of need, without the need to inspect and replace all the membranes of the stack. On the contrary, in electrodialyzers, when controlling one unitary cell or replacing a membrane, one needs to open the complete stack and to replace all the membranes to ensure tightness of the stack and limit liquid leakage after operation restart.

A twelfth advantage of the present invention is that the dihydrogen (H₂) is consumed continuously at the anode. This reduces the storage of dihydrogen. This reduces explosion risks and limits the size of the related ATEX zone.

A thirteen advantage of the present invention compared to electrodialysis wherein H₂ and O₂ gas are produced at the extremity electrodes of a stack of cells and must be managed, here only O₂ is produced, which simplifies the management of the associated by-products.

A fourteenth advantage of the present invention is that the thickness of liquid in each cell of the electrolyzer is much less than in an electrodialysis unitary cell. This is due to higher recirculation-flow in electrodialyzers which is linked to less current density per unit of surface of the membranes. Therefore, in the electrolysis used in present invention, less thickness of liquid to be crossed by the current in the cell, induces less ohmic losses in each cell compared to previous technologies using electrodialysis.

### Definitions

In the present specification, the term "ammonia-soda ash process" refers to the processes described in the above technical field as the first or second variant of the SOLVAY process, for producing sodium carbonate (soda-ash) by an ammonia process.

In the present specification, the term electrolysis refers to a technique using electric current to drive a chemical reaction. Generally, in an electrolysis the electric current drives an otherwise non-spontaneous chemical reaction. Such techniques usually use at least one couple of electrodes, named anode and cathode, and whereby respectively a chemical oxidation and a chemical reduction of ions or of neutral molecule occur.

In the present specification, the term 'electrolyzer' refers to an equipment wherein an electrolysis process is performed or may be performed. It generally comprises several cells or chambers comprising electrodes (anode or cathode) and said cells or chambers are generally delimited by at least one ion exchange membrane (also called ion perm-selective membrane).

In the present specification, the term 'anion-exchange membrane' (AEM) or 'anionic membrane' refers to an ion-exchange membrane that is permeable to anions and, ideally, impermeable to cations. Similarly, in present specification, the term 'cation-exchange membrane' (CEM) or 'cationic membrane' refers to an ion-exchange membrane that is permeable to cations and, ideally, impermeable to anions.

In the present specification, the term 'electrodialysis' refers to an electrochemical process which enables to at least partially or totally extract salt ions from one solution through an ion-exchange membrane subjected to an electric field to another solution.

In the present specification, the term 'cellstack' refers to an equipment wherein an electrolysis or an electrodialysis process may be performed. It generally comprises arrangement of several electrolysis cells or electrodialysis cells or chambers.

In the present specification, the term 'non-fossil CO₂', 'biogenic carbon' or 'biogenic carbonate' refer respectively to CO₂, carbon, or carbonate whose carbon source was directly in equilibrium with CO₂ in the atmosphere. In the present specification the 'non-fossil', or 'biogenic' (also called 'biobased') carbon content may be measured according to ASTM D6866-22 Standard Test Method for determining the biobased content of solid, liquid, and gaseous samples using Radiocarbon Analysis. Said method provides accurate biobased/biogenic carbon content results: the method uses Isotope Ratio Mass Spectrometry (IRMS) techniques to quantify the biobased or biogenic content of a given product, based on carbon 14 isotope measurement of said sample. Instrumental error of the method is typically within 0.1-0.5 % (on relative standard deviation).

In the present specification, the term 'green energy' also called 'renewable energy' refers commonly to energy from renewable natural resources that are replenished on a human timescale. In the present specification, this encompasses: solar energy (both thermic or photovoltaic electricity energy), wind power, hydropower, bioenergy (derived from biomass, generally from terrestrial of from marine origin), waste-to-energy, and geothermal energy. In present specification 'low fossil-CO₂ footprint energy' in complement of the 'green energy' listed above, includes: waste-to-energy, heat or cold recovered by heat pumps, and nuclear energy.

In the present specification, the term 'green electricity' also called 'renewable electricity' refers commonly to electricity produced from renewable natural resources that are replenished on a human timescale. This encompasses solar energy (either from thermic, or from photovoltaic electricity energy), wind power, hydropower or hydraulic electricity, marine power, electricity deriving or produced from bioenergy (ie. derived from biomass, and generally from terrestrial of from marine origin), and electricity derived from geothermal energy. In present specification 'low fossil-CO₂ footprint electricity' in complement of the 'green energy' listed above, includes waste-to-energy power, and nuclear power (electricity produced from nuclear energy).

In the present invention the dissolved CO₂ in the solution comprising NH₄Cl and NaCl fed in the base chamber, at pH of preferably at most 9.5 are generally present as bicarbonate ions (HCO₃⁻) and carbonate ions (CO₃²⁻). Counter ions of the bicarbonate ions being the cation present in the aqueous solution such as ammonium (NH₄+), sodium (Na⁺), and in less extent hydronium ions (H₃O⁺).

The term "comprising" includes "consisting essentially of" and also "consisting of".

In the present specification, the terms "%", "% by weight", "wt%", "wt. %", "weight percentage", or "percentage by weight" can be used interchangeably, unless the "%" term is explicitly referred to another physical unit (such as for instance "% in mole", or mol. %", "% in volume" or "vol. %", etc...).

If the term "about" is used before a quantitative value, this corresponds to a variation of ± 10% of the nominal quantitative value, unless otherwise indicated.

### Brief description of the figure

Figure 1 (Fig. 1) shows schematically a first variant of an embodiment of the process of the present invention.
Figure 2 (Fig. 2) shows schematically a second variant of an embodiment of the process of the present invention.

### Detailed description of the invention

The present invention relates to a process for producing ammonium carbonate ((NH₄)₂CO₃) and sodium carbonate (Na₂CO₃) using an electrolyzer comprising an hydrogen depolarized anode, and feeding a base chamber of the electrolyzer with an aqueous solution comprising ammonium chloride (NH₄Cl), sodium chloride (NaCl), dissolved carbon dioxide (CO₂) and obtaining an outlet solution from the base chamber comprising ammonium carbonate ((NH₄)₂CO₃) and Na₂CO₃.

The present invention relates also to a process for separating ammonium carbonate ( (NH₄)₂CO₃) and/or ammonium bicarbonate (NH₄HCO₃,) from a solution comprising salts selected among: ammonium bicarbonate, ammonium carbonate, ammonium chloride (NH₄Cl), sodium chloride (NaCl) and mixtures thereof.

The invention relates also to a process for producing sodium carbonate or sodium bicarbonate in an ammonia soda ash process using the ammonium carbonate (NH₄)₂CO₃ and sodium carbonate (Na₂CO₃) produced in the above cited processes.

In the present invention the dissolved CO₂ in the solution comprising NH₄Cl and NaCl fed in the base chamber is generally present as bicarbonate ions (HCO₃⁻) and carbonate ions (CO₃²⁻). Counter ions of the bicarbonate ions being the cation present in the aqueous solution such as ammonium (NH₄⁺), sodium (Na⁺), and in less extent hydronium ions (H₃O⁺).

The pH in the base chamber is generally maintained within a desired range by controlling the flow rate of the feeding solution and the current density applied to the electrolyzer, which will induce the generation of OH-.

In the present invention, the pH of the outlet solution from the base chamber is at most 9.5, preferably at most 9.0. The pH of the outlet solution from the base chamber is generally at least 6.5, preferably at least 7.0. This enables to minimize the formation of alkaline ammonia gas (NH₃) in the base chamber and its stripping by the dihydrogen (H₂) gas generated in the base chamber. Consequently, this reduces the pollution with ammonia of the hydrochloric acid when the dihydrogen is partly or totally recycled to the hydrogen depolarized anode.

The present invention relates also to further advantageous embodiments of the process which are described hereafter as 'Items'. Said embodiments are combinable with any one of the other embodiments, isolated or in combination with several embodiments, unless obviously non-compatible.

Item 1. A process for producing ammonium carbonate ((NH₄)₂CO₃) and sodium carbonate (Na₂CO₃) in an electrolyzer comprising an hydrogen depolarized anode, by feeding a base chamber of the electrolyzer with an aqueous solution comprising ammonium chloride (NH₄Cl), sodium chloride (NaCl), dissolved carbon dioxide (CO₂) and obtaining an outlet solution from the base chamber comprising ammonium carbonate ((NH₄)₂CO₃) and sodium carbonate (Na₂CO₃).

Item 2. Process according to item 1, wherein the pH of the outlet solution from the base chamber is at most 9.5.

Item 3. Process according to item 1 or 2, wherein the aqueous solution comprising NH₄Cl, NaCl, dissolved CO₂ comprises also NH₄HCO₃ and/or NaHCO₃.

Item 4. Process according to one of the preceding items wherein the pH of the aqueous solution comprising NH4Cl, NaCl, dissolved CO2 feeding the base chamber is at least 6.

Item 5. Process according to one of the preceding items wherein the electrolyzer comprises at least one elementary cell, said elementary cell comprising:
- the base chamber equipped with a cathode and
- an acid chamber equipped with the hydrogen depolarized anode
- an anionic membrane separating the base chamber and the acid chamber.

Item 6. Process according to the preceding item wherein an electrical tension is applied between the hydrogen depolarized anode and the cathode so that:
- the cathode in the base chamber reduces water into hydroxides ion (OH⁻) and into dihydrogen (H₂) gas, wherein hydroxide ion (OH⁻) reacts with dissolved CO₂ to form bicarbonate ion (HCO₃⁻) or carbonate ion (CO₃⁻⁻), and the dihydrogen (H₂) gas is separated from the solution and recovered;
- the acid chamber is fed with an aqueous solution, and at least part of the dihydrogen (H₂) gas recovered from the base chamber feeds the hydrogen depolarized anode wherein the dihydrogen gas is oxidized into H⁺ ion; and
- chloride ion (Cl⁻) migrate from the base chamber to the acidic chamber through the anionic membrane;
- an outlet aqueous solution comprising hydrochloric acid (HCl) is recovered from the acidic chamber;
- the outlet solution comprising ammonium carbonate ((NH₄)₂CO₃), sodium carbonate (Na₂CO₃) is recovered from the base chamber.

Item 7. The method according to one of the preceding items, wherein the anionic membrane is selective towards monovalent ions. In present specification the expression 'selective towards monovalent ions' refers to permselective cationic or anionic membranes permeable to respectively monovalent cations or monovalent anions, and not, or less, permeable to divalent or trivalent cations or anions. This is particularly advantageous in this embodiment as it further limits the migration of impurities such as divalent ions : sulfate (SO₄²⁻), silicates (SiO₃²⁻), or trivalent ions: borate (BO₃³⁻) ions from the base chamber to the acid chamber, and increase as such purity of the co-produced hydrochloric acid.

Item 8. Process according to one of the preceding items wherein the hydrogen-depolarized anode is an assembly comprising a cation-exchange membrane, an electro-catalytic layer and a current collector, forming an hydrogen gas chamber fed with a gaseous stream containing dihydrogen (H₂).

Item 9. Process according to one of the preceding items wherein the outlet solution comprising (NH₄)₂CO₃, Na₂CO₃ is reacted at least partially with a gas comprising carbon dioxide (CO₂) so that to form ammonium bicarbonate (NH₄HCO₃) and/or sodium bicarbonate (NaHCO₃) and is recycled back to the aqueous solution comprising NH₄Cl, NaCl, dissolved CO₂ feeding the base chamber of the electrolyzer.

Item 10. Process according to one of the preceding items wherein the carbon dioxide (CO₂) of the aqueous solution or of the gas comprising CO₂ is at least partially or totally a non-fossil CO₂.

Item 11. Process according to one of the preceding items, wherein the aqueous solution comprising NH₄Cl, NaCl, dissolved CO₂ derives from the mother liquid obtained after sodium bicarbonate filtration in a soda ash process, wherein the mother liquid may optionally be pre-treated to reduce volatile ammonia (NH₃) and carbon dioxide (CO₂).

Item 12. Process according to the preceding item, wherein the sodium chloride (NaCl) deriving from the mother liquid obtained after sodium bicarbonate filtration in a soda ash process to constitute the aqueous solution comprising NH₄Cl, NaCl, dissolved CO₂, is at least partially transformed electrochemically into sodium carbonate or sodium bicarbonate, and into hydrochloric acid (HCl) so that to increase the yield of the sodium chloride (NaCl) which is transformed into sodium bicarbonate or into sodium carbonate within the soda ash process.

Item 13. Process according to one of the preceding items, wherein the sodium chloride (NaCl) is sea salt, or is a water effluent comprising sodium chloride generated by a water desalination unit, or is from a salt mine (halite), or is from an industrial effluent or is an industrial residue comprising sodium chloride.

Item 14. The process according to the preceding item wherein the industrial effluent or the industrial residue is an effluent or a residue generated by one of the industries selected among the list of: a manufacture of an organic molecule, a manufacture of a chlorinated molecule, a manufacture of a polymer, a manufacture of a chlorinated polymer, and mixture thereof.

Item 15. The process according to the preceding item wherein the industrial effluent of residue is an effluent or a residue from an acid gas mitigation with a sodium base such as: sodium hydroxide, sodium carbonate or sodium bicarbonate, and mixtures thereof.

Item 16. Process according to any items 6 to 15, wherein an aqueous solution comprising HCl is recovered from the acidic chamber and is concentrated by removing at least part of its water content to produce a concentrated aqueous solution of hydrochloric acid (HCl).

Item 17. Process according to one of the preceding items, wherein an aqueous solution comprising hydrochloric acid (HCl) is recovered from the acidic chamber or the concentrated aqueous solution of hydrochloric acid is reacted with limestone, to obtain: a carbon dioxide (CO₂) gas and an aqueous solution comprising calcium chloride (CaCl₂).

Item 18. Process according to one of the preceding items, wherein the aqueous solution comprising calcium chloride (CaCl₂) is partially recycled to the feeding of the acidic chamber of the electrolyzer.

Item 19. Process according to one of the preceding items, wherein hydrochloric acid is produced by the electrolyzer, and said hydrochloric acid is reacted with solid residues generated by an ammonia distiller from an ammonia soda process so that to reduce the residual alkalinity of said solid residues.

Item 20. Process according to one of the preceding items, comprising the further step of introducing the outlet solution from the base chamber comprising (NH₄)₂CO₃ and Na₂CO₃, into an ammonia soda ash process, optionally after recovering gaseous ammonia from the outlet solution of the base chamber.

Item 21. Process according to one of the preceding items, comprising the further step of dissolving sodium chloride in the outlet solution of the base chamber to obtain an ammonia brine and introducing the thus obtained ammonia brine into an ammonia soda ash process.

Item 22. Process according to item 11, wherein the carbon dioxide is introduced into an ammonia soda ash process, optionally together with additional carbon dioxide from external sources.

Item 23. Process for separating ammonium carbonate ( (NH₄)₂CO₃) and/or ammonium bicarbonate (NH₄HCO₃,)from a solution comprising salts selected among: ammonium bicarbonate, ammonium carbonate, ammonium chloride (NH₄Cl), sodium chloride (NaCl) and mixtures thereof,
using an electrolyzer comprising three chambers: an acid chamber, a salt chamber, and a base chamber, and: an hydrogen depolarized anode, a cathode, a cationic membrane and an anionic membrane,
wherein :
- the base chamber is located between the cathode and the cationic membrane,
- the salt chamber is located between the cationic membrane and the anionic membrane,
- the acid chamber is located between the anionic membrane and the hydrogen depolarized anode;
said process comprising:
- feeding the salt chamber of the electrolyzer with the solution comprising the salts selected among: ammonium bicarbonate, ammonium carbonate, ammonium chloride, sodium chloride and mixtures thereof,
- feeding the base chamber with a base feeding solution comprising water,
- feeding the acid chamber with an acid feeding solution comprising water,
- applying an electrical tension between the hydrogen depolarized anode and the cathode, and
- obtaining an outlet solution from the salt chamber where at least part of the chloride ions (Cl⁻) of the ammonium chloride (NH₄Cl) and/or from the sodium chloride (NaCl) are removed through the anionic membrane to the acid chamber, and at least part of the ammonium ions (NH₄⁺) and or sodium ions (Na⁺) are removed through the cationic membrane to the base chamber, due to the action of the electrical tension.

Item 24. The method according to one of the preceding items, wherein the cationic membrane is selective of monovalent ions. In present item the expression 'selective of monovalent ions' refers to permselective cationic membranes permeable to respectively monovalent cations, and not, or less, permeable to divalent or trivalent cations. This is particularly advantageous in present invention as it further limit the migration of impurities such as divalent ions: calcium (Ca²⁺), magnesium (Mg²⁺), or trivalent ions (Fe³⁺, Al³⁺,...) from the salt chamber to the base chamber, and increases as such purity of the manufactured sodium carbonate or bicarbonate solution. It also reduces the incrustation in membranes of insoluble precipitates such as CaCO₃, Mg(OH)₂, or silicates of iron, aluminum or calcium.

Item 25. The process of item 23 or 24, wherein at least part of the water of one of the three chambers is removed using a separation equipment such as a membrane separation module, a reverse osmosis separation module, a distillation module, a water evaporation module, and preferably recycling at least one part of the removed water in one of the three chambers.

Item 26. The process of any item 23 to 25, wherein the solution comprising salts selected among: ammonium bicarbonate, ammonium carbonate, ammonium chloride (NH₄Cl), sodium chloride (NaCl) and mixtures thereof, is a liquid:
- deriving from a filter liquid obtained after separation of raw sodium bicarbonate crystals in an ammonia-soda ash process, or
- deriving from a filter liquid obtained after separation of raw sodium bicarbonate crystals in an ammonia-soda ash process, wherein said filter liquid has been treated by heat or steam to remove at least partially (NH₄)₂CO₃ and/or at least partially NH₄HCO₃.

Item 27. The process of any items 23 to 26, wherein sodium chloride (NaCl) is added to the outlet solution from the base chamber to obtain a salt enriched solution, and said enriched salt solution is further carbonated with carbon dioxide (CO₂) to produce sodium bicarbonate, preferably to produce sodium bicarbonate crystals.

Item 28. The process of any items 23 to 27, wherein ammonia (NH₃) is separated by stripping from the outlet solution from the base chamber.

Item 29. The process of any items 23 to 28, wherein ammonia (NH₃) and carbon dioxide (CO₂) are separated by stripping from the outlet solution from the salt chamber.

Item 30. The process of any items 23 to 29, wherein the electrolyzer comprises an acidic chamber located between the hydrogen depolarized anode and the anionic membrane wherein an acidification takes place due to the protons (H⁺) formed by dihydrogen (H₂) oxidation reaction at the hydrogen depolarized anode, said dihydrogen being provided at least partly by the dihydrogen (H₂) gas generated at the cathode and recycled to the anode.

Item 31. The process of any items 23 to 30, wherein the electrolyzer comprises an acidic chamber located between the hydrogen depolarized anode and the anionic membrane wherein an acidification takes place due to the protons (H⁺) formed by dihydrogen (H₂) oxidation reaction at the hydrogen depolarized anode, said dihydrogen (H₂) being provided by an external feedstock generated by another industry or by another process.

Item 32. Process for producing sodium carbonate or sodium bicarbonate in an ammonia soda ash process using:
- (i) the ammonium carbonate (NH₄)₂CO₃ and sodium carbonate (Na₂CO₃) obtained from the outlet solution from the base chamber of the electrolyzer according to the process of any one of the items 1 to 22, or from
- (ii) the ammonium carbonate ( (NH₄)₂CO₃) and/or ammonium bicarbonate (NH₄HCO₃) obtained from the outlet solution from the salt chamber of the electrolyzer according to the process of any one of the items 23 to 31; or from
- (iii) the ammonia (NH₃) and/or the sodium chloride (NaCl) and/ or the sodium hydroxide obtained from the outlet solution from the base chamber of the electrolyzer according to the process of any one of the items 28 to 31.

Item 33. The process according to the precedent item, wherein at least part or the totality of the carbon dioxide comprised in the sodium carbonate or in the sodium carbonate is from a non-fossil origin, such as from air, or from sea, or deriving from biomass.

Item 34. The process according to any of the preceding items, wherein the electrolyzer and/or surrounding pieces of equipment fluidically connected to the electrolyzer, or pieces of equipment for producing the sodium carbonate or the sodium bicarbonate,
use electricity having a reduced fossil-CO₂ footprint, preferably selected among the group consisting of: hydraulic electricity, photovoltaic electricity, wind electricity, waste-to-energy electricity, electricity generated from biomass combustion, electricity generated from hydrogen combustion, geothermal electricity, electricity generated by compressed air such as from compressed air stored in underground cavities, nuclear electricity, or mixtures thereof.

Item 35. The process according to any of the preceding items, wherein said process uses heat energy, and said heat energy derives from an energy with a low fossil-CO₂ footprint or with no fossil CO₂ footprint.

The concentration of ammonium and sodium chloride salts and dissolved carbon dioxide in the aqueous solution feeding the base chamber is not particularly limited. However, too diluted solutions lead to important energy consumption for recovering or concentrating the then generated ammonium carbonate or sodium carbonate.

Concentrated solutions may be suitable until they are not saturated in ammonium or sodium chlorides and or/ in ammonium or sodium bicarbonates or carbonates so that to avoid being on the limit of the saturation of said salts and be precipitated in the electrolyzer base chamber(s).

Generally, the aqueous solution feeding the base chamber comprises at most 6 mol NH₄⁺/ kg, at most 6 mol Cl⁻/ kg, and at most 3.5 mol Na⁺/ kg, and at most 3.5 mol / kg of dissolved CO₂, expressed by kg of the aqueous solution.

In the aqueous solution feeding the basic chamber, the chemical species concentrations should respect ions neutrality: i.e. the sum of the cation species equals the sum of the anion species expressed in equivalent electronic charges.

The aqueous feeding solution comprises ammonium chloride and sodium chloride, dissolved CO₂, and may comprise other components such as ammonium bicarbonate, and/or sodium bicarbonate. The said aqueous feeding solution is advantageously deriving from a filter solution, obtained from the separation of crude sodium bicarbonate crystals in their mother liquor, exiting a SOLVAY carbonation column.

In one embodiment, the aqueous solution comprising NH₄Cl, NaCl, dissolved CO₂ is the mother liquid obtained after sodium bicarbonate filtration (crude sodium bicarbonate) in a soda ash process. Optionally, the mother liquid is pre-treated to reduce or adjust volatile ammonia (NH₃) and carbon dioxide (CO₂) content.

In a further embodiment, the aqueous feeding solution of the base chamber(s) may comprise advantageously a complement of dissolved CO₂ by injecting carbon dioxide in the mother liquor (ie carbonating the mother liquor).

In a further embodiment, the outlet solution from the base chamber comprising solved (NH₄)₂CO₃ and Na₂CO₃ is carbonated by injection of a CO₂ comprising gas to produce a carbonated liquor or a carbonated slurry, wherein at least part of the solved carbonate ions (CO₃²⁻) from the ammonium and sodium carbonate are transformed into bicarbonate ions (HCO₃⁻), and at least part of the carbonated liquor or slurry is recycled back into the base chamber. In this further embodiment, according to the pH of the outlet aqueous solution from the base compartment, and the quantity of CO₂ injected in the inlet aqueous solution before being introduced in the base compartment, the ammonium carbonate ((NH₄)₂CO₃) can be partly or totally present as ammonium bicarbonate (NH₄HCO₃). The same for the sodium carbonate (Na₂CO₃) which can be partly or totally present in the aqueous solutions of the base compartment (inlet solution or outlet solution) as sodium carbonate (Na₂CO₃) or as sodium bicarbonate (NaHCO₃) when further bicarbonated with the CO₂ comprising gas.

As the bicarbonate (HCO₃⁻)/ carbonate (CO₃²⁻) ions ratio imposes the pH of the solutions, generally both ammonium and sodium carbonates or bicarbonates salts are present concomitantly in the said aqueous solutions.

The concentration of ammonium chloride in the aqueous feeding solution of the invention, is not particularly limited. In a preferred embodiment the feeding solution comprises at least 2 g/kg, such as at least 5 g/kg, preferably at least 10 g/kg, more preferably at least 50g/kg, even more preferably at least 100 g/kg, even more preferably at least 130 g/kg, and even more preferably at least 160 g/kg of ammonium chloride per kg of the feeding solution.

The outlet solution from the base chamber comprises generally at most 5.0 mol. of total ammonia/ kg. Advantageously it comprises at most 2.0 mol of total ammonia/ kg, more advantageously at most 1.5, or even more advantageously at most 1.0 mol of total ammonia / kg of outlet solution. In such embodiments, the total free ammonia is advantageously at most 0.5 mol of free ammonia / kg of outlet solution, or even more advantageously at most 0.3 mol of free ammonia / kg of outlet solution.

In a further embodiment, the outlet solution from the base chamber comprising (NH₄)₂CO₃ and Na₂CO₃, is introduced into a soda ash process. Optionally, before introducing the outlet solution from the base chamber into a soda ash process, gaseous ammonia from the outlet liquid of the base chamber is recovered. Such recovery of ammonia may be made by heating and stripping.

In a further embodiment, of the above cited embodiments, the process comprises the further step of dissolving sodium chloride in the outlet solution of the base chamber to obtain an ammonia brine and introducing the thus obtained ammonia brine into the soda ash process.

The separation of crude sodium bicarbonate crystals from their mother liquor, when exiting a SOLVAY carbonation column, is operated generally on a rotary filter, or a band filter or a centrifuge. The said mother liquid comprises then ammonium chloride that has to be regenerated into ammonia to be recycled and use again in the ammonia - soda ash process.

The regeneration of at least part of the said ammonium chloride (NH₄Cl) into alkaline ammonia such as ammonium carbonate or as ammonium bicarbonate, may be then operated according to the present invention.

The concentration of the sodium chloride in the aqueous feeding solution is not particularly limited. In a preferred embodiment, the aqueous feeding solution may comprise at least 20 g/kg. The aqueous feeding solution comprises generally at most 250 g/kg, preferably at most 100 g/kg sodium chloride.

In a further embodiment, the process of the present invention comprises recovering in a further step, an outlet liquid from the acid chamber containing hydrochloric acid.

The outlet liquid from the acid chamber may be partially recycled to the inlet of the acidic chamber. The remaining of this outlet liquid is taken out of the process, and corresponds to one co-production of the process of the present invention.

The thus produced hydrochloric acid may be used as such, or may be concentrated by removing at least part of its water content to produce a concentrated aqueous solution of hydrochloric acid. Concentration of up to 37.5% HCl or more, in weight, is advantageous for the transport of such concentrated acid.

The hydrochloric acid or the concentrated hydrochloric acid can also either be sold, used in other processes, or for example be reacted with calcium carbonate (limestone) to produce carbon dioxide. This is particularly advantageous, as the carbon dioxide gas obtained by such acid attack is of high concentration, such as at least 80% CO₂ in volume, or at least 90% CO₂ in volume or higher. This may be rendered possible by tightening air entries in used acid attack equipment. By comparison, conventional limekilns for calcining calcium carbonate produce CO₂ comprising gas at a concentration of about 40% in volume. In addition, such high CO₂ concentrations bring a high flexibility for the use of the associated CO₂ comprising gas, for its further use in a soda ash process. It also limits the size of the pipes for transporting such gas and reduces the power to compress said gas for injecting it in bicarbonation columns (to produce crude bicarbonate) or for injecting it in sodium bicarbonate crystallizers.

Therefore, in a further embodiment of the process of the present invention, the aqueous solution of hydrochloric acid from the acid chamber, or the concentrated aqueous solution of hydrochloric acid, is reacted with limestone, to obtain carbon dioxide (CO₂) and an aqueous solution of calcium chloride (CaCl₂). Optionally, in the above further embodiment, the present process comprises the further step of recycling at least partly the aqueous solution of calcium chloride (CaCl₂) to the acid chamber. The thus obtain carbon dioxide may be advantageously injected and dissolved in the aqueous solution feeding the base chamber. This is particularly advantageous, as it enables to ease the control of the pH at the outlet of the base chamber to at most 9.5, or at most 9.0.

The above obtained carbon dioxide (CO₂) can alternatively be injected and dissolved in at least part of the outlet solution from the base chamber (comprising (NH₄)₂CO₃ and Na₂CO₃) so that to form dissolved ammonium bicarbonate (NH₄HCO₃) or dissolved sodium bicarbonate (NaHCO₃), and recycling the thus obtained solution with the aqueous solution comprising NH₄Cl, NaCl, and dissolved CO₂ to feed the base chamber. This is particularly advantageous in a 'feed and bleed' operation of the base chamber of the electrolyzer.

The above obtained carbon dioxide (CO₂) can also be advantageously introduced into a soda ash process, optionally together with additional carbon dioxide from external sources, such as steam generators using carbonated combustibles, or such as carbon dioxide from other industries such as cement industry or glass industry.

The process of the present invention, relates then also to a process for producing sodium carbonate by a soda ash process, comprising the step of producing (NH₄)₂CO₃ and Na₂CO₃ according to one of the embodiments of the present invention or of its optional alternatives. Indeed the present invention has the advantage to regenerate the acidic form of ammonia such as ammonium chloride (NH₄Cl) into an alkaline ammonia: such as ammonium carbonate or ammonia bicarbonate. Such dissolved ammonium alkaline salts can be usefully recycled in brines upstream of the conventional soda ash process, to be able to absorb again acidic carbon dioxide in one of, or in all of, the different steps were CO₂ is used. Among such steps, it is advantageous to introduce the outlet solution from the base chamber, or a solution deriving from the outlet solution from the base chamber at the ammonia absorption step, or at the bicarbonation columns washing step, or at the crude sodium bicarbonate precipitation step.

In a further embodiment, the (NH₄)₂CO₃ and Na₂CO₃ from the base chamber outlet solution, or deriving from said base chamber outlet solution, is fed in a soda ash process before the ammonia (NH₃) absorption in NaCl brine, such as before stage 3 of Ullmann's Encycl. 2012, "Sodium carbonate" chapters reported above.

In a further embodiment, the (NH₄)₂CO₃ and Na₂CO₃ from the base chamber outlet solution, or deriving from said base chamber outlet solution, is fed in a soda ash process before the precipitation of crude sodium bicarbonate produced in a bicarbonation column (ie. 'making column'), such as before stage 4 of Ullmann's Encycl. 2012, "Sodium carbonate" chapters reported above, or fed directly in a bicarbonation column. Alternatively to a bicarbonate column, they may be fed before (or into) a sodium bicarbonate crystallizer.

In the present invention, part of the hydrochloric acid can be used in specific usages different than the acid attack of calcium carbonate that generates carbon dioxide. The hydrochloric acid can be concentrated and sold.

In the present invention, advantageously the CO₂ sourcing is complemented or totally provided for the production of soda ash or for the production of refined sodium bicarbonate, with CO₂ from other industries generating CO₂ gases, such as cement industry, glass industry, iron industry, or waste to energy industries burning carbon-containing combustibles (either fossil, or non-fossil combustibles such as waste biomass), or from mineral or underground origin. Advantageously, the CO₂ sourcing can be originated from, or complemented with, CO₂ containing gases comprising a CO₂ capture step: such as from fumes, combustion gases, industrial gases, gas effluents, or even CO₂ captured from ambient air or from ocean. Said gases may be used as such, or after re-concentration in CO₂, generally to reduce their inert and air content to reduce constraints for their transport and increase their absorption yields.

In an alternative, or in complement of the precedent described CO₂ sourcing, the recovery of CO₂ containing gases exiting soda ash process or exiting refined sodium bicarbonate process, such as fumes from steam generators, or from carbonation columns, constitutes an advantageous further embodiment. To ease its use in the production of soda ash or of refined sodium bicarbonate, the said CO₂ containing gas may also be re-concentrated in CO₂ before its use. Examples of techniques for such re-concentration are described in WO2016/102568 in the name of SOLVAY. Such CO₂ containing gases or re-concentrated CO₂ containing gasses may also be used for providing the dissolved CO₂ of the aqueous solution comprising NH₄Cl and NaCl that feeds the base chamber of the electrolyzer of the present invention.

In either of any embodiments described above, the hydrochloric acid produced in the acid chamber may be reacted in totality or partially with limestone to obtain carbon dioxide. The said carbon dioxide may be then used for precipitating crude sodium bicarbonate crystals in a bicarbonation column; or alternatively said carbon dioxide may be then used for precipitating crude sodium bicarbonate in a sodium bicarbonate crystallizer.

In the present invention, the hydrochloric acid (HCl) concentration in the acidic compartment is preferably at least 0.1 mol/ L, more preferably at least 0.5 mol/ L. Indeed it has been observed that the more concentrated the hydrochloric acid is, the less leaks of ammonia diffusing in the acidic compartment are.

### Examples

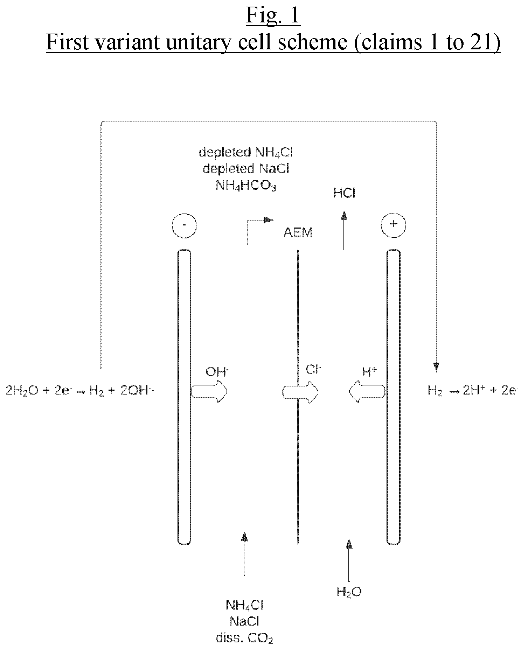

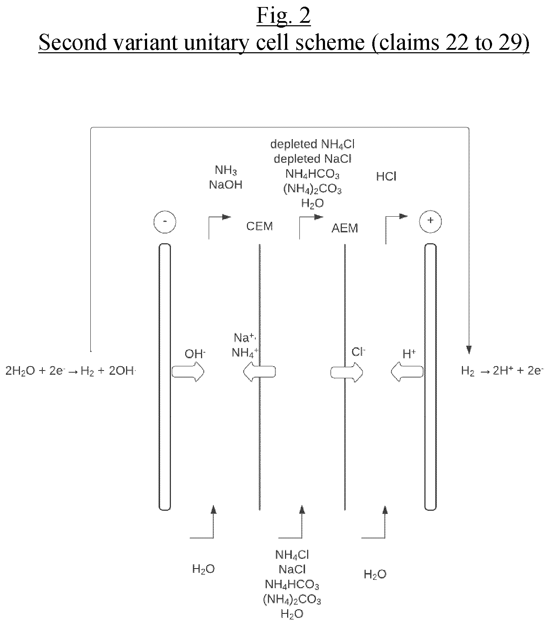

**Figures 1** and **2** exemplify two advantageous embodiments of the present invention.

**Figure 1** exemplifies a first variant of the process of the present invention. It relates to a process for producing (NH₄)₂CO₃ and Na₂CO₃ in an electrolyzer equipped with an hydrogen depolarized anode, a cathode and an anionic membrane separating a base chamber (the cathodic chamber) and an acid chamber (the anodic chamber). The base chamber of the electrolyzer is fed with an aqueous solution comprising NH₄Cl, NaCl, dissolved CO₂ and an outlet alkaline solution is removed from the base chamber, said outlet solution comprises (NH₄)₂CO₃ and Na₂CO₃. In said base chamber (the cathodic chamber of the represented cell), the pH of the outlet solution from the base chamber is controlled preferably to at most 9.5. This enables to limit ammonia gas stripping with the dihydrogen generation at the cathode of the electrolysis of the ammonium chloride.

The chamber located between the cathode and the anionic membrane constitutes the base chamber. In this chamber there is a generation of OH⁻ ions and dihydrogen originating from water reduction, according to the following electrochemical reaction: 2 H₂O + 2e⁻ → H₂ + 2 OH⁻ .

The OH⁻ ions, generated in the base chamber by the electrolyzer, react with the dissolved CO₂, present as solved carbon dioxide (H₂CO₃) or as bicarbonate ion (HCO₃⁻), and form ammonium carbonate or bicarbonate, and/ or sodium carbonate or bicarbonate.

The chamber located between the dihydrogen depolarized anode and the anionic membrane constitutes an acid chamber (ie the anodic chamber of the electrolyzer) fed with water. There, acidification takes place due to the protons formed by dihydrogen oxidation reaction at the depolarized anode, according to the following electrochemical reaction: H₂ → 2 H⁺ + 2e⁻. Concomitantly, chloride ions migrate from the base chamber to the acid chamber through the anion exchange membrane, and form hydrochloric acid (HCl).

The operation of a depolarized anode with dihydrogen, enables to avoid producing chlorine (Cl₂) and therefore reduces the risk of formation of explosive nitrogen trichloride. Preferably, the dihydrogen generated at the cathode is partially or totally recycled to the anode. Alternatively, dihydrogen from an external source can be fed to the depolarized anode as a complement. When part, or the totality, of the dihydrogen generated at the cathode is recycled to the depolarized anode of the acidic compartment, usefully the dihydrogen is washed with water or with diluted hydrochloric acid to remove stripped ammonia in the dihydrogen to avoid contaminating the hydrochloric acid generated in the acid chamber (anodic chamber) with ammonia.

The generated ammonium carbonate and sodium carbonate from the outlet aqueous solution from the base chamber, having a decreased concentration of chloride ions, due to its migration to the acid chamber, may be then recycled back to an ammonia-soda process.

**Figure 2** exemplifies a second variant of advantageous embodiments of the process of the present invention.
This variant relates to a process for producing (NH₄)₂CO₃ and Na₂CO₃ in an electrolyzer equipped with an hydrogen depolarized anode, a cathode, a cationic and an anionic membranes. The chamber between the cationic membrane and anionic membrane constitutes a salt chamber of the electrolyzer. The salt chamber is fed with an aqueous solution comprising NH₄Cl, NaCl, (NH₄)₂CO₃ and Na₂CO₃. An outlet solution from the salt chamber is removed from the salt chamber where at least part of the chloride ions (Cl⁻) of the ammonium chloride (NH₄Cl) or from the sodium chloride (NaCl) are removed through the anionic membrane to an acid chamber, and at least part of the ammonium ions (NH₄⁺) and sodium ions (Na+) are removed through the cationic membrane to the base chamber (or cathodic chamber), therefore regenerating alkaline ammonia (NH₃ or NH₄OH when dissolved in aqueous solution), and NaOH. In this chamber there is a supply of OH- ions and hydrogen originating from water reduction. The ammonia in the base chamber solution can be optionally separated by stripping. Recovered ammonia (NH₃) by stripping of the solution exiting the base chamber, or the ammonia solution (NH₄OH) exiting the base chamber with NaOH, and the aqueous solution exiting the salt chamber depleted in ammonium and sodium chloride, may be recycled to an ammonia soda plant and be reused with a partial re-saturation in NaCl and in alkaline ammonia, to produce again crystallized crude bicarbonate.

## Claims

1. Process for producing ammonium carbonate ((NH₄)₂CO₃) and sodium carbonate (Na₂CO₃) in an electrolyzer comprising an hydrogen depolarized anode, by feeding a base chamber of the electrolyzer with an aqueous solution comprising ammonium chloride (NH₄Cl), sodium chloride (NaCl), dissolved carbon dioxide (CO₂) and obtaining an outlet solution from the base chamber comprising ammonium carbonate ((NH₄)₂CO₃) and sodium carbonate (Na₂CO₃).

2. Process according to claim 1, wherein the pH of the outlet solution from the base chamber is at most 9.5.

3. Process according to claim 1 or 2, wherein the aqueous solution comprising NH4Cl, NaCl, dissolved CO₂ comprises also NH₄HCO₃ and/or NaHCO₃.

4. Process according to one of the preceding claims wherein the electrolyzer comprises at least one elementary cell, said elementary cell comprising:
- the base chamber equipped with a cathode and
- an acid chamber equipped with the hydrogen depolarized anode
- an anionic membrane separating the base chamber and the acid chamber.

5. Process according to the preceding claim wherein an electrical tension is applied between the hydrogen depolarized anode and the cathode so that:
- the cathode in the base chamber reduces water into hydroxides ion (OH⁻) and into dihydrogen (H₂) gas, wherein hydroxide ion (OH⁻) reacts with dissolved CO₂ to form bicarbonate ion (HCO₃⁻) or carbonate ion (CO₃⁻⁻), and the dihydrogen (H₂) gas is separated from the solution and recovered;
- the acid chamber is fed with an aqueous solution, and at least part of the dihydrogen (H₂) gas recovered from the base chamber feeds the hydrogen depolarized anode wherein the dihydrogen gas is oxidized into H⁺ ion; and
- chloride ion (Cl⁻) migrate from the base chamber to the acidic chamber through the anionic membrane;
- an outlet aqueous solution comprising hydrochloric acid (HCl) is recovered from the acidic chamber;
- the outlet solution comprising ammonium carbonate ((NH₄)₂CO₃), sodium carbonate (Na₂CO₃) is recovered from the base chamber.

6. Process according to one of the preceding claims wherein the hydrogen-depolarized anode is an assembly comprising a cation-exchange membrane, an electro-catalytic layer and a current collector, forming an hydrogen gas chamber fed with a gaseous stream containing dihydrogen (H₂).

7. Process according to one of the preceding claims wherein the outlet solution comprising (NH₄)₂CO₃, Na₂CO₃ is reacted at least partially with a gas comprising carbon dioxide (CO₂) so that to form ammonium bicarbonate (NH₄HCO₃) and/or sodium bicarbonate (NaHCO₃) and is recycled back to the aqueous solution comprising NH4Cl, NaCl, dissolved CO₂ feeding the base chamber of the electrolyzer.

8. Process according to one of the preceding claims wherein the carbon dioxide (CO₂) of the aqueous solution or of the gas comprising CO₂ is at least partially or totally a non-fossil CO2.

9. Process according to one of the preceding claims, wherein the aqueous solution comprising NH4Cl, NaCl, dissolved CO₂ derives from the mother liquid obtained after sodium bicarbonate filtration in a soda ash process, wherein the mother liquid may optionally be pre-treated to reduce volatile ammonia (NH₃) and carbon dioxide (CO₂).

10. Process according to the preceding claim, wherein the sodium chloride (NaCl) deriving from the mother liquid obtained after sodium bicarbonate filtration in a soda ash process to constitute the aqueous solution comprising NH₄Cl, NaCl, dissolved CO₂, is at least partially transformed electrochemically into sodium carbonate or sodium bicarbonate, and into hydrochloric acid (HCl) so that to increase the yield of the sodium chloride (NaCl) which is transformed into sodium bicarbonate or into sodium carbonate within the soda ash process.

11. Process according to one of the preceding claims, comprising the further step of introducing the outlet solution from the base chamber comprising (NH₄)₂CO₃ and Na₂CO₃, into an ammonia soda ash process, optionally after recovering gaseous ammonia from the outlet solution of the base chamber.

12. Process according to one of the preceding claims, comprising the further step of dissolving sodium chloride in the outlet solution of the base chamber to obtain an ammonia brine and introducing the thus obtained ammonia brine into an ammonia soda ash process.

13. Process for separating ammonium carbonate ( (NH₄)₂CO₃) and/or ammonium bicarbonate (NH₄HCO₃,) from a solution comprising salts selected among: ammonium bicarbonate, ammonium carbonate, ammonium chloride (NH₄Cl), sodium chloride (NaCl) and mixtures thereof,
using an electrolyzer comprising three chambers: an acid chamber, a salt chamber, and a base chamber, and: an hydrogen depolarized anode, a cathode, a cationic membrane and an anionic membrane,
wherein :
- the base chamber is located between the cathode and the cationic membrane,
- the salt chamber is located between the cationic membrane and the anionic membrane,
- the acid chamber is located between the anionic membrane and the hydrogen depolarized anode;
said process comprising:
- feeding the salt chamber of the electrolyzer with the solution comprising the salts selected among: ammonium bicarbonate, ammonium carbonate, ammonium chloride, sodium chloride and mixtures thereof,
- feeding the base chamber with a base feeding solution comprising water,
- feeding the acid chamber with an acid feeding solution comprising water,
- applying an electrical tension between the hydrogen depolarized anode and the cathode, and
- obtaining an outlet solution from the salt chamber where at least part of the chloride ions (Cl⁻) of the ammonium chloride (NH₄Cl) and/or from the sodium chloride (NaCl) are removed through the anionic membrane to the acid chamber, and at least part of the ammonium ions (NH₄⁺) and or sodium ions (Na⁺) are removed through the cationic membrane to the base chamber, due to the action of the electrical tension.

14. The process according to the preceding claim wherein at least part of the water of one of the three chambers is removed using a separation equipment such as a membrane separation module, a reverse osmosis separation module, a distillation module, a water evaporation module, and preferably recycling at least one part of the removed water in one of the three chambers.

15. The process of claim 13 or 14, wherein the solution comprising salts selected among: ammonium bicarbonate, ammonium carbonate, ammonium chloride (NH₄Cl), sodium chloride (NaCl) and mixtures thereof,
is a liquid:
- deriving from a filter liquid obtained after separation of raw sodium bicarbonate crystals in an ammonia-soda ash process, or
- deriving from a filter liquid obtained after separation of raw sodium bicarbonate crystals in an ammonia-soda ash process, wherein said filter liquid has been treated by heat or steam to remove at least partially (NH₄)₂CO₃ and/or at least partially NH₄HCO₃.
